# EUROPÄISCHE PATENTANMELDUNG

(11) **EP 4 722 181 A1**
(43) Veröffentlichungstag der Anmeldung: **08.04.2026**
(21) Anmeldenummer: 25206945.5
(22) Anmeldetag: 06.10.2025
(51) Int. Cl.: C04B 35/573, B28B 1/00, C04B 35/626, C04B 35/634, C04B 35/636, C04B 35/80, C04B 35/628

(54) **VERFAHREN ZUR HERSTELLUNG VON GRÜNKÖRPERN**

(30) Priorität: 07.10.2024 DE 102024128772
(71) Anmelder: Fraunhofer-Gesellschaft zur Förderung der angewandten Forschung e.V., 80686 München (DE); ESK-SIC GmbH, 50226 Frechen (DE)
(72) Erfinder: Kunze, Steffen, 01277 Dresden (DE); Berger, Christian, 01277 Dresden (DE); Wild, Stefan, 50226 Frechen (DE)
(74) Vertreter: Pfenning, Meinig & Partner mbB

(57) **Zusammenfassung**

Bei dem Verfahren werden Partikel eines keramischen Werkstoffs und/oder Kohlenstoffpartikel mit einer Beschichtung eines thermoplastischen Polymers so beschichtet, dass die Partikel zu jeweils mindestens 30 % ihrer Oberfläche mit einer Schicht aus dem thermoplastischen Polymer beschichtet sind. Dann werden die Partikel schichtweise sukzessive zu einem Pulverbett ausgebildet und in jeder Schicht verteilt. Nach dem Auftrag einer Schicht wird die Oberfläche lokal definiert mit einem Laserstrahl bestrahlt und das thermoplastische Polymer zumindest teilweise geschmolzen wird, so dass eine stoffschlüssige Verbindung von neben- und übereinander angeordneten Partikeln mit dem thermoplastischen Polymer und damit ein dreidimensionales Halbzeug erhalten wird. Nach einer Entnahme des Halbzeugs aus dem Pulverbett wird eine thermische Behandlung durchgeführt, bei der der thermoplastische Werkstoff zu einem unschmelzbaren Kunststoff vernetzt und anschließend in inerter Atmosphäre unter Ausgasung flüchtiger Bestandteile in einen Kohlenstoff überführt wird, so dass der resultierende kohlenstoffgebundene poröse Körper durch eine Reaktionsbindung in eine reaktionsgebundene Keramik überführbar ist.

## Beschreibung

Die Erfindung betrifft ein pulverbettbasiertes additives Herstellungsverfahren zur Herstellung von Grünkörpern, die sich durch eine Reaktionsbindung in keramische Bauteile überführen lassen.

Mit der Erfindung lassen sich insbesondere durch das Powder Bed Fusion - Laser Beam (PBF-LB) Verfahren komplexe Grünkörper aus keramischen, insbesondere carbidkeramischen Pulvern und/oder aus Kohlenstoffpulvern herstellen. Diese können anschließend konventionell durch eine Pyrolyse mit anschließender Silicierung reaktionsgebunden werden. Als Ergebnis liegen keramische Bauteile bzw. Verbundbauteile vor, die beispielsweise in der verarbeitenden- oder chemischen Industrie oder in der Energiewirtschaft Verwendung finden können.

Keramische Bauteile werden in der Regel durch die Formgebung und einer nachgelagerten thermische Behandlung, welche aus einer Entbinderung und einer Sinterung bestehen kann, hergestellt. Materialbeispiele für klassisches Festphasensintern sind gesintertes Aluminiumoxid oder gesintertes Siliciumcarbid. Ebenfalls ist es möglich, keramische Bauteile durch eine Reaktionsbindung (Reaktionssintern respektive Reaktionsinfiltration) von Keramikpulvern oder Pulvern von Elementen oder Elementverbindungen herzustellen. Ein Beispiel hierfür ist siliciuminfiltriertes Siliciumcarbid. Ebenfalls lassen sich keramische Bauteile durch die Bindung keramischer Pulver mit einer verflüssigbaren oftmals artfremden Bindung (z.B. Flüssigphasensintern von Siliciumcarbid mit artfremden Sinterhilfsmitteln bestehend aus Yttriumoxid und Aluminiumoxid oder Aluminiumnitrid) herstellen. Ein Beispiel hierfür ist glasgebundenes Siliciumcarbid. Diese verschiedenen Sinterverfahren haben gemeinsam, dass die keramischen Pulver im Vorfeld der thermischen Behandlung miteinander zu einem Grünkörper formgebend verbunden werden müssen. Das Verbinden keramischer Pulver zu einem definiert geformten Grünkörper, der anschließend durch eine thermische Behandlung in ein keramisches Bauteil überführbar ist, ist eine technische Herausforderung.

Es existieren mannigfaltige Möglichkeiten Partikel zu Grünkörpern zu binden. Als Grünkörper bezeichnet man hierbei ein in formgegebenes, noch nicht endgültig thermisch behandeltes Bauteil, dass meist aus Partikeln und Bindern besteht. Typischer Weise sind diese Binder organische Verbindungen.

Eine Möglichkeit der Formgebung ist die klassische Pressformgebung. Hier wird typischerweise ein Granulat aus mehreren Partikeln hergestellt, die durch einen Binder miteinander agglomeriert sind. In der Regel weisen diese Granulate Durchmesser von einigen hundert Mikrometern auf. Diese Granulate haben das Ziel eine gute Fließfähigkeit aufzuweisen und gut verdichtbar zu sein. In einer Presse lassen sich die Granulate miteinander zu Grünkörpern verdichten. Dabei brechen die Granulate auf und bilden idealerweise ein homogenes dichteres Grünkörpergefüge.

Eine weitere Möglichkeit ist die Gießformgebung. Hier werden Schlicker - im Wesentlichen bestehend aus Binder, Wasser und Pulver - in poröse Gießformen gegossen. Hierbei ist der Binder typischerweise ebenfalls organisch. Die poröse Gießform entzieht dem Schlicker das Wasser und es bildet sich ein definierter stabiler Scherpen (also Grünkörper) an der Oberfläche der Gießform aus.

Ebenfalls besteht die Möglichkeit, Grünköper durch Spritzguss, Extrusion, Gießformgebung mit härtbaren Reaktionsharzen und vielen weiteren Verfahren herzustellen. Die Verfahren weisen alle die Gemeinsamkeit auf, dass stets eine Negativform oder formgebendes Mundstück (z.B. Extruson/Strangpressen) verwendet werden muss.

Es besteht auch die Möglichkeit, keramische Grünkörper mit additiven Herstellungsverfahren herzustellen, bevor diese entbindert und gesintert bzw. reaktionsgebunden werden.

So wird bei einer Fused Filament Fabrication (FFF) ein Filament aus Partikeln in Kombination mit einem thermoplastischen Polymer hergestellt. Das Polymer wird in einer Düse durch Temperatur geschmolzen und anschließend mit Druck in definierten Bahnen abgelegt, um so einen dreidimensionalen Grünkörper zu erhalten.

Beim Binder-Jetting (BJT) Verfahren werden Partikel, die in einem Pulverbett liegen, mit einer Druckflüssigkeit, die definiert mittels eines Druckkopfes eingebracht wird, gebunden. Die Druckflüssigkeit besteht in der Regel aus einem organischen Binder und einem Lösemittel.

Mit der Vat Photo Polymerisation (VPP) erfolgt die Formgebung aus einer photosensitiven Suspension heraus, die aus Partikeln und einem photoaktivem organischen Binder bestehen, der mittels Belichtung härtet.

Das Powder Bed Fusion - Laser Beam (PBF-LB) gehört ebenfalls zu den additiven Formgebungsverfahren. Bei der PBF-LB-Technologie wird der Maschinenbauraum analog dem BJT schrittweise mit pulverförmigem Material gefüllt, wobei in jeder Schicht die Pulver lokal mit einem Laser geschmolzen bzw. teilweise geschmolzen werden. Die Herstellung des dreidimensionalen Werkstücks erfolgt Schicht für Schicht nacheinander. Durch präzises Abfahren der Bahnen mit einem Laserstrahl wird das Material lokal definiert aufgeschmolzen. Dabei verbinden sich die Pulverpartikel bis zur vorherigen aufgetragenen Schicht stoffschlüssig. Dieser Prozess wird wiederholt, um schrittweise das Bauteil aufzubauen, wodurch eine hohe Detailtreue und Materialstabilität sichergestellt werden können.

Es existieren bereits Möglichkeiten zur Herstellung von SiSiC z.B. durch PBF-LB.

So ist es bekannt eine Silicium + SiC Mischung mittels PBF-LB zu verarbeiten und so dreidimensionale Körper zu erhalten. Als Binder fungiert dabei das Silicium. Durch die notwendigen hohen Temperaturen zur Verflüssigung von Silicium, muss diese Technik mit hohen Laserleistungen und unter inerten Bedingungen durchgeführt werden, da andernfalls Oxidbildungen stattfinden. Die auf diese Weise erzeugten Formteile haben eine hohe Porosität und mussten mit Phenolharz nachinfiltriert und anschließend siliciert werden. Diese Technologie ist somit sehr aufwändig.

Ebenfalls sind Herstellungsverfahren in der Literatur beschrieben, bei denen SiC Pulver mit Kohlenstoff und Phenolharz gemischt getrocknet und gemeinsam aufgemahlen werden. Durch diesen Prozess entstehen Harz-Keramik Pulvermischungen, die sich via PBF-LB solidifizieren lassen. Beim PBF-LB schmilzt das Harz auf und verbindet die Feststoffpartikel miteinander. Von Nachteil ist, dass es durch den Mahlprozess zu einer Trennung der keramischen Partikel und dem Polymer kommt. Es entsteht eine breite Partikelgrößenverteilung bestehend aus feinen Kunststoffpartikeln und SiC-Partikeln. Derartige Systeme haben den Nachteil, dass sie aufgrund der geringeren Fließfähigkeiten im Pulverbett zu Schichtfehlern neigen und eine verhältnismäßig niedrige Schüttdichte aufweisen. Dementsprechend ist die Qualität der gedruckten Bauteile oftmals nicht optimal. Grünkörper, die auf diese Weise hergestellt werden, verzeichnen bei der Pyrolyse eine vergleichsweise hohe Schwindung. Aufgrund der schlechten Gründichte im Pulverbett weisen derartige Bauteile nach einer Reaktionsbindung einen sehr hohen Si-Anteil auf.

Ähnlich wird vorgegangen, in dem Phenolharzpulver verwendet werden, die mit Kohlenstoff-Ultrakurzfasern gemischt und via PBF-LB geformt werden. Anschließend erfolgt die Pyrolyse und Silicierung. Die Kohlenstofffasern werden hierbei vollständig zu einem kubischen SiC abreagiert. Auch hier besteht das Problem, dass eine sehr schlechte Gründichte entsteht und die Detailtreue aufgrund der Fasern beim Aufbauen des Pulverbettes schlecht ausgeprägt ist.

EP 2 998 282 B1 beschreibt einen Prozess, bei dem ein thermoplastischer Binder als Pulver und SiC als Pulver verwendet und via PBF-LB solidifiziert werden sollen. Als Binder wird darin PA (Nylon) vorgeschlagen. Aufgrund der niedrigen Kohlenstoffausbeute muss der additiv geformte Körper im Grünzustand nochmals mit einer Kohlenstoffquelle (PF-Harz oder Zucker) nachinfiltriert werden.

Gemäß dem in DE 198 09 657 B4 beschriebenen Prozess werden ein thermoplastischer Binder als Pulver und SiC als Pulver verwendet und via PBF-LB soldifiziert. Bei der Art der eingesetzten Binderpolymere ist eine Nachinfiltration zwingend erforderlich.

Nach dem Stand der Technik werden bei der Herstellung von Grünkörpern generell Pulvermischungen Feststoff + organischer Binder eingesetzt. Die Pulvermischungen können sich aufgrund der unterschiedlichen Dichten bei der Handhabung (Schütten und Rakeln) segregieren. Somit sind die Binder inhomogen im Pulverbett verteilt. Dies führt auch zu niedrigen Festigkeiten im grünen- und pyrolysierten Zustand. Die niedrigen Festigkeiten und niedrigen Dichten im Grünkörper erfordern ein Nachinfiltrieren nach der Formgebung bzw. Pyrolyse der Bauteile mit einem Harz oder Polysaccharid als Kohlenstoffspender. Ebenfalls ist bei den Pulvermischungen die Wärmeleitung im Laserbrennfleck suboptimal. Es gibt nur kleine Kontaktflächen zwischen den keramischen Partikeln und dem polymeren Binder in Partikelform. Das Aufschmelzen des Binders dauert länger, wenn er im Schatten des Laserstrahles, verdeckt durch Partikel angeordnet ist. Dadurch muss mit höheren Energiedichten pro Fläche gearbeitet werden (Höhere Laserleistung oder höhere Verweildauern oder kleiner Abstand zwischen den Laserbahnen). Das inhomogene Aufschmelzen des Binders und die hohen Energieeinträge des Laserstrahls machen eine Inertisierung des Pulverbettes notwendig. Weiterhin ist eine formgenaue Fertigung von Grünkörpern durch die höheren Energiedichten unwahrscheinlicher, da höhere Energiedichten mit einer größeren Wärmeeinflusszone analog dem Schweißen einhergehen. Hierdurch ist mit einer ungeplanten "Aufdickung der Bauteile" zu rechnen.

Durch die Verwendung von pulverbasierten Bindern ist ein größerer Abstand zwischen den einzelnen Partikeln im Pulverbett vorhanden, was eine geringere Gründichte impliziert. Beim Aufschmelzen der Binder kann es durch viskoses Fließen und Form- bzw. Langenänderung der Binder kommen. Hierdurch kann eine signifikante Schwindung senkrecht zur Schichtlage beim Aufschmelzprozess eintreten. Diese beim PBF-LB Prozess auftretende Verdichtung in eine Vorzugsrichtung kann bei den anschließenden Hochtemperaturprozessen (Pyrolyse und ggf. Silicierung) zu mechanischen Spannungen führen, die zu einem Bauteilverzug oder einer Rissbildung führen.

Durch die Verwendung von pulverbasierten Bindern werden beim Rakelprozess nur verhältnismäßig niedrige Dichten erzielt, da die meist feinen Pulver des Binders die Fließfähigkeit senken. Hierdurch werden Rakelfehler in einer Schicht in das Pulverbett eingebaut. Im Volumen können dadurch Schichtverschiebungen auftreten, wobei die mit neuem Pulver verschmolzene darunterliegende Schicht durch eine geringe Fließfähigkeit verschiebt bzw. wegreißt.

Es ist daher Aufgabe der Erfindung, Möglichkeiten für die Herstellung von Grünkörpern mittels eines pulverbettbasierten additiven Herstellungsverfahren, die mit Partikeln gebildet werden, mit denen Grünkörper mit erhöhter Festigkeit und Gründichte ohne eine zwingend erforderliche nachträgliche Organik-Infiltration herzustellen, und in denen Partikel homogener verteilt angeordnet sind.

Erfindungsgemäß wird diese Aufgabe mit einem Verfahren, das die Merkmale des Anspruchs 1 aufweist, gelöst. Vorteilhafte Ausgestaltungen und Weiterbildungen des Verfahrens können mit in abhängigen Ansprüchen bezeichneten Merkmalen realisiert werden.

Bei dem erfindungsgemäßen Verfahren zur Herstellung von Grünkörpern mit einem pulverbettbasierten additiven Herstellungsverfahren mit denen reaktionsgebundene keramische Bauteile herstellbar sind, werden Partikel aus einem keramischen, insbesondere einem carbidkeramischen Werkstoff und/oder aus Kohlenstoff mit einer Beschichtung eines thermoplastischen Polymers so beschichtet, dass die Partikel zu jeweils mindestens 30 % ihrer Oberfläche mit einer Schicht aus dem thermoplastischen Polymer beschichtet sind.

Die so beschichteten Partikel werden schichtweise sukzessive zu einem Pulverbett ausgebildet und in jeder Schicht verteilt, wie dies bei pulverbettbasierten additiven Herstellungsverfahren bereits der Fall ist.

Nach dem Auftrag jeweils einer Schicht wird die Oberfläche der jeweils obersten angeordneten Schicht lokal definiert mit einem Laserstrahl bestrahlt und dabei durch die lokal definiert eingebrachte thermische Energie das thermoplastische Polymer zumindest teilweise geschmolzen wird, so dass eine stoffschlüssige Verbindung von neben- und übereinander angeordneten Partikeln mit dem thermoplastischen Polymer und damit ein dreidimensionales Halbzeug erhalten wird.

Ein hierfür eingesetzter Laserstrahl sollte so fokussiert, betrieben und sein Brennfleck/Laserspot mit einer Vorschubgeschwindigkeit bewegt werden, dass zumindest ein Anschmelzen des thermoplastischen Polymers erreicht werden kann. Die eingetragene Energie sollte beim additiven Fertigen der Grünkörper derartig niedrig sein, dass eine thermische Zersetzung, Oxidation oder anderweitige Umwandlung der polymeren Bestandteile vermieden werden kann. Ebenfalls sollte die eingetragene Energie nicht zu einer verstärkten Oxidation der Oberflächen der verwendeten Keramiken und Kohlenstoffe führen.

Es sollte eine relative Dichte einer Schüttung der beschichteten Pulver nach ISO 697 von mindestens 30 % eingehalten werden. Nach dem Solidifizieren mit Hilfe des Laserstrahls sollte eine relative Dichte von mindestens 30 % erreicht sein.

Im Anschluss an die Formgebung und die Entnahme des Grünkörpers aus dem Pulverbett wird eine thermische Behandlung durchgeführt, bei der der thermoplastische Binder zumindest teilweise vernetzt und in einen nicht mehr schmelzbaren Zustand (Duromer) übergeht. Dies verhindert weitgehend einen Bauteilverzug bei der anschließenden Pyrolyse unter inerten Bedingungen, in der der polymere Binder bei Temperaturen zwischen 150°C - 1000°C unter Abspaltung flüchtiger Verbindungen, in Kohlenstoff überführt wird. Derartig kohlenstoffgebundene Halbzeuge lassen sich anschließend durch eine Reaktionsbindung mit flüssigem Silicium bzw. einer flüssigen Legierung, die als Hauptbestandteil Silicium beinhaltet, in einen keramischen Werkstoff überführen. Dabei reagiert mindestens ein Teil des bei der Pyrolyse gebildeten Kohlenstoffs ebenfalls zu einem Carbid, was die Dichte und Festigkeit der resultierenden reaktionsgebundenen keramischen Bauteile erhöht.

Ebenfalls ist es möglich, Mischungen aus Carbidkeramiken und Kohlenstoffpartikeln herzustellen und deren Oberflächen mit dem Polymer zu beschichten. Darüber hinaus ist es auch möglich, ausschließlich Kohlenstoffpartikel mit dem Polymer zu beschichten. Die Kohlenstoffpartikel können hierbei überwiegend amorph (z.B. Glaskohlenstoff), überwiegend hexagonal (z.B. Grafit oder Hartgrafit) oder eine überwiegend kubisch flächenzentrierte Kristallstruktur (z.B. Diamant) aufweisen. Auch sind Mischungen aus diesen Kohlenstoffpartikeln möglich. Die Verarbeitung der Kohlenstoff beinhaltenden Pulver verläuft identisch zu den carbidkeramischen Pulvern. Im Gegensatz zu den carbidkeramischen Pulvern reagieren bei der Reaktionsbindung mindestens Teile der Kohlenstoffpulver mit dem einströmenden Silicium zu Siliciumcarbid. Da die Reindichte der verwendeten Kohlenstoffpulver über 0,96 g/cm³ liegt, ist diese Reaktion mit einer Verkleinerung der Poren und somit einer Verringerung des freien Siliciumgehaltes im Bauteilgefüge nach der Reaktionsbindung verbunden, was die mechanischen und chemischen Eigenschaften des resultierenden keramischen Werkstoffs verbessert.

Die Partikel sollten mit thermoplastischem Werkstoff so beschichtet werden, dass ein Anteil des thermoplastischen Polymers zwischen 5 Volumen-%, bevorzugt zwischen 10 Volumen-% und 80 Volumen-% in Bezug auf den carbidkeramische Werkstoff und/oder Kohlenstoff eingehalten werden kann.

Bevorzugt kann als carbidkeramischer Werkstoff SiC, B₄C, ZrC, HfC, WC, TiC eingesetzt werden.

Es sollten mindestens 80 % der Partikel mit thermoplastischem Polymer zu mindestens 30 % der Oberfläche beschichtet werden und maximal 20 % der Partikel mit weniger als 30 % der Oberfläche beschichtet bleiben.

Es können Partikel mit einer mittleren Partikelgröße d₅₀ im Bereich 10 µm - 200 µm eingesetzt werden. Thermoplastisches Polymer sollte mit einer maximalen mittleren Beschichtungsdicke von 10 µm auf die Oberflächen von Partikeln aufgebracht werden.

Die Beschichtung von Partikeln kann mit einer Lösung des jeweiligen thermoplastischen Polymers oder durch ein Aufschmelzen oder Aufdampfen des Polymers, bevorzugt in einem Mischer oder mit einem Wirbelschichtverfahren oder einem Sprühverfahren durchgeführt werden.

Zur Erhaltung einer optimalen Verarbeitungsfähigkeit, sollten die die Partikel nach dem Beschichtungsprozess überwiegend als jeweils einzeln beschichtete Partikel vorliegen. Eine vermehrte Agglomeration mehrerer Partikel miteinander zu einer Granulatstruktur verschlechtert die Verarbeitungsfähigkeit insbesondere bei einem Rakelprozess. Für das Abtrennen bzw. das Auflösen von Agglomeraten sollte dann falls erforderlich nach dem Beschichtungsprozess ein Sieben der Pulver erfolgen.

Als thermoplastisches Polymer können bevorzugt Phenolharze, Furanharze, Lignine oder Polysaccharide eingesetzt werden. Insbesondere eignen sich Novolake. Diese speziellen Phenolharze werden in einem Formaldehyd-Phenol-Verhältnis kleiner als 1:1, die durch saure Kondensation der Edukte synthetisiert. Durch die Mischung mit Hexamethylentetramin (HMTA) in einem Anteil von 5 Masse-% - 10 Masse-% (typischer Weise 8 Masse-%) lassen sich thermoplastische Novolake durch Wärmezufuhr in unschmelzbaren Duroplaste vernetzen.

Ein wesentlicher Vorteil der Erfindung besteht darin, auf die keramischen Pulverpartikel und/oder Pulverpartikeln aus Kohlenstoff eine dünne Polymerschicht aufzubringen. Durch die Polymerbeschichtung liegt quasi kein ungebundenes loses Polymer-Keramikpulvergemisch bzw. Kohlenstoffpulver mehr in dem additiv verarbeitungsfähigen Pulver vor. Das Polymer umschließt dabei teilweise bis vollständig die Oberflächen der Keramik- bzw. Kohlenstoffpartikel und ist damit dort stoffschlüssig verbunden.

Die Umhüllung der keramischen, insbesondere carbidischen respektive kohlenstoffbasierten-Partikel führt dazu, dass die umhüllten Partikel weniger splittrig sind und an Rundheit gewinnen. Dadurch erhöht sich die Fließ- und Rakelfähigkeit derartig präparierter Pulver im Pulverbett. Ebenfalls erhöht sich die Schütt- und Klopfdichte der Pulver, da im Gegensatz zum Stand der Technik nur noch durch sehr wenige, bestenfalls keine losen Polymerpulverpartikel zwischen den Keramik- respektive Kohlenstoffpulverpartikeln angeordnet sind. Das Ergebnis ist, dass im Pulverbettprozess sehr homogene und dichte Pulverlagen in den einzelnen Schichten erreichbar sind, die den Stand der Technik übertreffen.

Durch die partielle Temperaturerhöhung im Laserbrennfleck schmilzt die Polymerschicht, die um die Partikel herum ausgebildet ist, mindestens teilweise auf und verbindet sich mit der Polymerschicht oder der Oberfläche daran anliegender Partikel. Mittels des Laserenergieeintrags lassen sich somit zeit- und temperaturgesteuert Bindungen einzelner Partikel im gerakelten Pulver der jeweiligen Schichten lokal definiert aufbauen. Somit ist es möglich, die beschichteten Partikel in einem Pulverbett (geschüttet, gerollt oder gerakelt) durch selektives Erwärmen miteinander stoffschlüssig zu verbinden und auf diese Weise dreidimensional geformte Grünkörper bzw. Halbzeuge für das Sintern herzustellen.

Da die keramischen Pulver respektive die kohlenstoffbasierten Pulver eine, im Vergleich zu Polymeren, sehr hohe thermische Leitfähigkeit besitzen und nur ein dünner Polymerfilm um die keramischen bzw. kohlenstoffbasierten Partikel liegt, erfolgt ein sehr gutes und homogenes Anschmelzen des an den Oberflächen vorhandenen thermoplastischen Polymers während des PBF-LB Prozesses. Im Gegensatz dazu, besteht beim Stand der Technik, in dem weitestgehend an- und organische Pulvermischungen vorliegen, typischer Weise ein reiner Pulverkontakt der Polymerpartikel mit den Partikeln der Keramik oder der kohlenstoffbasierten Partikel. Die dabei vorliegenden sehr kleinen Kontaktflächen bedingen oftmals ein schlechtes Aufschmelzen der polymeren Partikel. Dementsprechend muss nach dem Stand der Technik der Laserprozess mit höheren Laserenergiedichten gefahren werden, damit die polymeren Partikel mindestens teilweise aufschmelzen. Dies macht eine Inertisierung der Atmosphäre im Pulverbett notwendig, wie aus dem Stand der Technik bekannt, ersichtlich ist. Die erfindungsgemäß mit Polymer beschichteten Partikel lassen sich auch mit sehr niedrigeren Laserenergiedichten in Luftatmosphäre schmelzen und stoffschlüssig verbinden.

Da beim Stand der Technik die polymeren Partikel auch als Abstandshalter zwischen den Feststoffpartikeln fungieren, kommt es bei deren Aufschmelzprozess auch zu einer hohen Schwindung in Tiefenrichtung. Dies tritt bei den erfindungsgemäß mit Polymer beschichteten Partikeln nur in einer wesentlich geringeren Ausprägung auf.

Das eingesetzte thermoplastische Polymer sollte durch einen thermischen Energieeintrag mindestens partiell aufschmelzbar sein. Das Polymer kann auch mit einem Lösungsmittel, wie etwa Ethanol, lösbar sein, um mit einer solchen Lösung die Beschichtungen auszubilden. Gleichzeitig sollte es die Eigenschaft aufweisen durch einen Temperatureinfluss zu vernetzen, was etwa durch den Zusatz eines geeigneten polymerspezifischen Härters erreicht werden kann. Dabei verliert das Polymer überwiegend seinen thermoplastischen Charakter und reagiert derartig, dass ein überwiegend unschmelzbares Polymer entsteht. Die wesentlichen Einflussfaktoren für die Vernetzungsreaktion in ein unschmelzbares Polymer sind hierbei die Temperatur und die Zeit.

Das Polymer bzw. dessen Lösung sollte auf den zu beschichtenden Partikeln (Keramik respektive Kohlenstoff ein gutes Benetzungsverhalten aufweisen. Der Benetzungswinkel sollte kleiner als 60 ° sein.

Vorteilhaft ist es, wenn die eingesetzten Keramik- und/oder Kohlenstoffpartikel eine möglichst sphärische Partikelform aufweisen. Dies erhöht die Homogenität der Polymerbeschichtung beim Beschichtungsprozess, führt zu einem besseren Fließ- und Rakelverhalten und erhöht die Dichte des Pulverbettes.

Die Polymerbeschichtungen auf den Partikeloberflächen sollten mindestens 30 %, bevorzugt mindestens 50 % der jeweiligen Partikeloberflächen überdecken und dort stoffschlüssig verbunden sein. Die Dicke der Polymerschichten sollte maximal 10 µm betragen und ein Anteil des Polymers von ca. 10 Volumen-% bis 80 Volumen-% in Bezug zu Keramik bzw. Kohlenstoff eingehalten sein. Mindestens 80 % der Partikel sollten mit dem thermoplastischen Polymer an ihren Oberflächen mindestens teilweise beschichtet werden und maximal 20 % unbeschichtet bleiben. Es sollte eine Schüttdichte > 45 % theoretischer Dichte bei der Ausbildung der Schichten im Pulverbett erreichbar sein.

Der Anteil an Partikeln aus frei vorliegendem thermoplastischem Binder, der sich bei der Verarbeitung durch Abrieb oder Abplatzen bilden kann, sollte so gering wie möglich gehalten werden, um die Verarbeitbarkeit der Pulver nicht zu verschlechtern. Es sollten maximal 20 % des vorliegenden Binders frei vorliegen und mindestens 80 % in der Form der Pulverbeschichtung an den Keramik- und/oder Kohlenstoffpartikeln stoffschlüssig haften.

Die feste, definierte und gleichmäßige Bindung von Polymer und den Keramikpartikeln bzw. Kohlenstoffpartikeln hat den Vorteil, dass auf diese Weise ein homogener Grünkörper beim PBF-LB erhalten wird. Wenn das Polymer vorwiegend als Pulver vorliegt, wie oftmals zum Stand der Technik geschildert, kommt es zwangsweise aufgrund der unterschiedlichen Partikelgrößen und Dichten zur Segregationseffekten beim Rakelprozess und somit zu Inhomogenitäten der Keramikpartikel im Grünkörper. Dies führt bislang zu eher schlechten Oberflächen, geringeren Gründichten und einem inhomogenen Gefüge Die thermische Leitung in das Polymer, das als dünne Schicht um die Keramik-oder Kohlenstoffpulverpartikel vorliegt, ist sehr gut und sehr homogen. Das Polymer schmilzt somit sehr gut und gleichmäßig auf, auch wenn sehr niedrige Laserleistungen und Verweildauern gewählt werden. Es ist bei einem erfindungsgemäßen Prozess dadurch keine Inertisierung des Pulverbettes notwendig.

Die Beschichtung mit thermoplastischem Polymer kann sehr dünn ausgebildet sein, so dass die Schwindung im Herstellprozess im Vergleich zum Stand der Technik niedriger ausfällt.

Die erreichbare Schütt- und Klopfdichte der Pulver ist sehr hoch. Die Gründichte der hergestellten Grünkörper ist auch dadurch ebenfalls sehr hoch. Die Festigkeit im pyrolysierten Zustand ist ausreichend für ein Handling, so dass ein Nachinfiltrieren im Grün- oder Braunzustand, wie im Stand der Technik immer dargestellt ist, nicht unbedingt notwendig ist.

Bei der Durchführung des Verfahrens ist während des Laserprozesses keine inerte Atmosphäre erforderlich. Es muss nicht zwingend nachinfiltriert werden, was kostenseitig einen hohen Vorteil bietet. Die Grünkörper sind nach der Pyrolyse fest genug, damit sie handhabbar sind. Bei einem ggf. günstigen nachinfiltrieren (keine Mussbedingung), erfolgt diese erst nach der Pyrolyse des hergestellten Halbzeuges.

Die Reaktionsbindung kann mit Silicium oder einer Legierung erfolgen, die als Hauptlegierungselement Silicium aufweist. Bevorzugt sollten als Legierungselemente insbesondere Übergangsmetalle, die stabile Carbide bilden (Übergangsmetalle der 4-5 und 6 Gruppe) dazu genutzt werden. Bei der Reaktionsbindung reagiert Silicium zumindest mit einem Teil des bei der Pyrolyse zu Kohlenstoff umgewandelten polymeren Binders unter Ausbildung von Siliciumcarbid.

Die Längenschwindung des gesamten Prozesses der Pyrolyse und Reaktionsbindung ist kleiner 4 %, in Bezug auf das additiv gefertigte Grünteil.

Folgende Beispiele sollen die Möglichkeiten der Formgebungsmöglichkeiten noch besser erläutern:
Beispiel 1: Zur Herstellung eines komplexen Grünkörpers aus SiC durch selektives Schmelzen mittels Laserstrahlung und Überführung in einen reaktionsgebundenen Keramikverbund

Siliciumcarbid-Pulver (mittlerer Partikeldurchmesser d₅₀ von 53 µm gemessen über Laserdiffraktometrie) werden in einem inertisierten Eirichmischer vorgelegt. Ein in Ethanol gelöster Novolak, dem als Härter Hexamethylentetramin (HMTA) mit einem Anteil von 8 Masse-% zugesetzt ist, wird während des Mischprozesses schrittweise mittels einer Düse während des Rührprozesses eingeleitet. Das Masseverhältnis Novolak incl. HMTA zu SiC beträgt 1:13,3. Die Dichte des Novolaks beträgt 1,4 g/cm³. Die Dichte des SiC beträgt 3,2 g/cm³. Die Volumenverhältnisse betragen in der Mischung demnach 14,67 Vol% Phenolharz zu 85,33 Vol% Siliciumcarbid. Nach dem Mischen und Abdampfen des Lösungsmittels liegt eine dünne Schicht des Polymers auf den Oberflächen der Siliciumcarbidpartikel vor. Anschließend erfolgt ein Siebvorgang, in dem mögliche Agglomerationen der Partikel aufgebrochen oder abgesiebt und frei liegende feine Polymerpartikel abgetrennt werden. Die Schichtdicke des Polymers auf den Pulvern beträgt in Durchschnitt 1 - 2 µm. Die Oberfläche der Siliciumcarbidpartikel ist jeweils zu 80 % mit dem Polymer beschichtet. Bei weniger als 5 % der Partikel ist mikroskopisch keine mindestens teilweise vorliegende Polymerschicht nachweisbar. Die derartig präparierte Pulvermischung wird in einem typischen laserbasierten Powder Bed Fusion-Laser Beam Drucker für Polymere schichtweise selektiv lokal definiert miteinander gebunden. Der Energieeintrag des Lasers liegt bei 681 mJ/mm³, der Hatchabstand lag bei 0,25 mm, die Vorschubgeschwindigkeit des Laserbrennflecks bei 135 mm/s und die Schichtdicke der einzelnen Schichten im Pulverbett jeweils bei 100 µm. Dabei erwärmt der Laserstrahl die Partikel, die thermoplastische Polymerbeschichtung schmilzt kurzzeitig zumindest teilweise auf und die aneinander liegenden Partikel verbinden sich stoffschlüssig miteinander. Die Dichte der hergestellten Grünkörper liegt bei 1,3 g/cm³. Im Anschluss an den selektiven Schmelzprozess der polymerbeschichteten Pulverpartikel lassen sich die auf diese Weise geformten Halbzeuge aus dem Pulverbett entfernen. Anschließend wird durch eine nachgelagerte Temperung der organische Binder derartig vernetzt, dass er nicht mehr schmelzbar ist. Daraufhin erfolgt eine Pyrolyse und bei diesem Beispiel eine Silicierung. Dabei entsteht nach der Reaktionsbindung ein siliciuminfiltrierter Siliciumcarbidkörper. Die 4-Punkt Biegefestigkeit des auf diese Weise hergestellten Werkstoffs beträgt 200 MPa, der Weibullmodul liegt bei 16. Insofern nach der Pyrolyse des Halbzeugs noch eine Nachinfiltration mit Phenolharz und anschließend erneut pyrolysiert und anschließend siliciert wird, erhöht sich die Weibullfestigkeit auf 270 MPa der Weibullmodul verharrt bei einem Wert von 16.

Beispiel 2: Herstellung eines komplexen Grünkörpers aus Grafit und SiC durch selektives Schmelzen mittels Laser und Überführung in eine reaktionsgebundene Keramik

Siliciumcarbid-Pulver (mittlerer Partikeldurchmesser d₅₀ 70 µm) und Grafitpulverpartikel (mittlerer Partikeldurchmesser d₅₀ 70 µm gemessen über Laserdiffraktometrie) werden mit einem Anteil von 70 Masse-% zu 30 Masse-% in einem Taumelmischer miteinander gemischt. Ein Novolak, dem Hexamethylentetramin (HMTA) als Härterkomponente mit einem Anteil von 8 Masse-% in Bezug zu dem Polymer zugesetzt ist, wird im Masseverhältnis 1:10 in Ethanol gelöst. Das Masseverhältnis des polymeren Binders zu der Keramikpulvermischung beträgt 1:9.

Die Dichte des Novolaks beträgt 1,4 g/cm³. Die Dichte des SiC beträgt 3,2 g/cm³. Die Dichte des Kohlenstoffs beträgt 2,4 g/cm³. Die Volumenverhältnisse betragen in der Mischung demnach 18,76 Vol% Phenolharz zu 81,24 Vol% der Pulvermischung.

Die Lösung wird anschließend mit der Keramikpulvermischung in einen Eirichmischer gegeben und in inerter Atmosphäre gemischt. Anschließend erfolgt während des Mischprozesses durch das Evakuieren und Erwärmen der Suspension das Abdampfen des Lösemittels. Die Pulverpartikel besitzen nach diesem Trocknungsprozess eine ausgeprägte Beschichtung mit dem Polymer. Die Schichtdicke des Binders auf den Pulvern auf den Partikeloberflächen ist kleiner als 2 µm. Die Oberfläche der SiC- als auch der Grafitpartikel ist mit ca. 80 % durch das Polymer bedeckt. Weniger als 5 % der Partikel besitzen keine mindestens teilweise Beschichtung mit dem Polymer. Nach dem Siebvorgang, in dem mögliche Agglomerationen der Partikel aufgebrochen respektive abgesiebt werden, werden die beschichteten Partikel in einem typischen laserbasierten PowderBedFusion Drucker für Polymere schichtweise selektiv miteinander stoffschlüssig verbunden. Der Energieeintrag des Lasers lag bei 600 mJ/mm³ der Hatchabstand 0,25 die Vorschubgeschwindigkeit des Laserbrennflecks bei 120 mm/s und die Schichtdicke im Pulverbett jeweils bei 100 µm. Dabei erwärmt der Laserstrahl die Partikel, die thermoplastische Beschichtung schmilzt kurzzeitig zumindest teilweise auf und die aneinander liegenden Partikel verbinden sich miteinander stoffschlüssig. Die erhaltene Grünkörperdichte liegt bei 1,33 g/cm³.

Im Anschluss an den selektiven Schmelzprozess der polymerbeschichteten Pulver lassen sich die auf diese Weise geformten Halbzeuge aus dem Pulverbett entfernen. Anschließend wird durch eine nachgelagerte Temperung der organische Binder derartig vernetzt, dass er nicht mehr schmelzbar ist. Im Anschluss erfolgen eine Pyrolyse und eine Silicierung. Dabei entsteht ein mit Silicium infiltriertes Siliciumcarbid mit darin implementierten Grafitpartikeln.

## Patentansprüche

1. Verfahren zur Herstellung von Grünkörpern mit einem pulverbettbasierten additiven Herstellungsverfahren, mit denen reaktionsgebundene keramische Bauteile herstellbar sind, bei dem Partikel eines keramischen Werkstoffs und/oder Kohlenstoffpartikel mit einer Beschichtung eines thermoplastischen Polymers so beschichtet werden, dass die Partikel zu jeweils mindestens 30 % ihrer Oberfläche mit einer Schicht aus dem thermoplastischen Polymer beschichtet sind und
die so beschichteten Partikel schichtweise sukzessive zu einem Pulverbett ausgebildet und in jeder Schicht verteilt werden, wobei
nach dem Auftrag jeweils einer Schicht die Oberfläche der jeweils obersten angeordneten Schicht lokal definiert mit einem Laserstrahl bestrahlt und durch die lokal definiert eingebrachte Energie das thermoplastische Polymer zumindest teilweise geschmolzen wird, so dass
eine stoffschlüssige Verbindung von neben- und übereinander angeordneten Partikeln mit dem thermoplastischen Polymer und damit ein dreidimensionales Halbzeug erhalten wird und
im Anschluss einer Entnahme des Halbzeugs aus dem Pulverbett eine thermische Behandlung durchgeführt wird, bei der der thermoplastische Werkstoff zu einem unschmelzbaren Kunststoff vernetzt und anschließend in inerter Atmosphäre unter Ausgasung flüchtiger Bestandteile in einen Kohlenstoff überführen lässt, so dass der resultierende kohlenstoffgebundene poröse Körper durch eine Reaktionsbindung in eine reaktionsgebundene Keramik überführbar ist.

2. Verfahren nach Anspruch 1, **dadurch gekennzeichnet, dass** das die Partikel mit thermoplastischem Werkstoff beschichtet werden, so dass ein Anteil des thermoplastischen Polymers zwischen 5 Volumen-% und 80 Volumen-% in Bezug auf den keramischen Werkstoff und/oder Kohlenstoffs eingehalten wird.

3. Verfahren nach einem der vorhergehenden Ansprüche, **dadurch gekennzeichnet, dass** als keramischer Werkstoff ein Carbid eingesetzt wird.

4. Verfahren nach einem der vorhergehenden Ansprüche, **dadurch gekennzeichnet, dass** der eingesetzte Kohlenstoff eine überwiegend hexagonale oder kubisch-flächenzentrierte oder amorphe Kristallstruktur oder einer Mischung aus diesen Kristallstrukturen aufweist.

5. Verfahren nach einem der vorhergehenden Ansprüche, **dadurch gekennzeichnet, dass** mindestens 80 % der Partikel mit thermoplastischem Polymer an ihren Oberflächen mindestens teilweise beschichtet werden und maximal 20 % der Partikel mit weniger als 30 % der Oberfläche beschichtet werden.

6. Verfahren nach einem der vorhergehenden Ansprüche, **dadurch gekennzeichnet, dass** Partikel mit einer mittleren Partikelgröße d₅₀ im Bereich 10 µm -200 µm und thermoplastisches Polymer mit einer maximalen Beschichtungsdicke von 10 µm - bevorzugt eine Beschichtungsdicke kleiner 2 µm - auf die Oberflächen aufgebracht werden.

7. Verfahren nach einem der vorhergehenden Ansprüche, **dadurch gekennzeichnet, dass** die Beschichtung von Partikeln mit einer Lösung des jeweiligen thermoplastischen Polymers oder durch geschmolzenes thermoplastisches Polymer, bevorzugt in einem Mischer oder mit einem Wirbelschichtverfahren oder Sprühverfahren durchgeführt wird.

8. Verfahren nach einem der vorhergehenden Ansprüche, **dadurch gekennzeichnet, dass** als thermoplastisches Polymer ein Phenolharz, Furanharz, Lignin oder ein Polysaccharid eingesetzt wird.

9. Verfahren nach einem der vorhergehenden Ansprüche, **dadurch gekennzeichnet, dass** ein mindestens teilweises Vernetzen des thermoplastischen Polymers, das an der Oberfläche der beschichteten Keramik- und/oder Kohlenstoffpartikel nach der Ausbildung stoffschlüssiger Verbindungen Beschichtungen bildet, in der Art durchgeführt wird, dass das Polymer nach der Vernetzung nicht mehr schmelzbar ist.

10. Verfahren nach einem der vorhergehenden Ansprüche, **dadurch gekennzeichnet, dass** die Überführung in Kohlenstoff bei Temperaturen zwischen 150 °C und 1000 °C, also eine Pyrolyse, durchgeführt wird.

11. Verfahren nach einem der vorhergehenden Ansprüche, **dadurch gekennzeichnet, dass** die Bestrahlung mit dem Laserstrahl in Luftatmosphäre durchgeführt wird.

12. Verfahren nach einem der vorhergehenden Ansprüche, **dadurch gekennzeichnet, dass** nach dem Pyrolyseschritt, bei dem die Umwandlung des Binders in Kohlenstoff erfolgt, eine Nachinfiltration mit einem flüssigen Polymer erfolgt und anschließend eine zweite Pyrolyse durchgeführt wird, bei der das nachinfiltrierte Polymer unter Ausgasung flüchtiger Bestandteile zu Kohlenstoff überführt wird.
